# EUROPÄISCHE PATENTSCHRIFT

(11) **EP 2 006 124 B1**
(45) Veröffentlichungstag und Bekanntmachung des Hinweises auf die Patenterteilung: **23.06.2010**
(21) Anmeldenummer: 08155246.5
(22) Anmeldetag: 28.04.2008
(51) Int. Cl.: B60C 11/12

(54) **Fahrzeugluftreifen mit dreidimensionalen Einschnitten**
Pneumatic tyres for a vehicle comprising three-dimensional sipes
Pneus de véhicule avec des incisions en forme à trois dimensions

(30) Priorität: 21.06.2007 DE 102007029085
(43) Veröffentlichungstag der Anmeldung: 24.12.2008
(73) Patentinhaber: Continental Reifen Deutschland GmbH, 30165 Hannover (DE)
(72) Erfinder: Gaus, Helmut, 31535 Neustadt (DE)
(74) Vertreter: Finger, Karsten

(56) Entgegenhaltungen:
- EP-A- 0 945 248
- EP-A- 1 533 141
- EP-A- 1 782 970
- WO-A-99/48707
- WO-A-2007/101794

## Beschreibung

Die Erfindung betrifft einen Fahrzeugluftreifen mit einem Laufstreifen, welcher sich aus Profilelementen, wie Profilblöcken oder Profilrippen, zusammensetzt, welche mit Einschnitten versehen sind, die sich in radialer Richtung erstrecken und deren Einschnittwände Abschnitte mit einer, in Draufsicht betrachtet, Wellen- oder Zickzackform aufweisen, die über die radiale Erstreckung des Abschnittes eine gleich bleibende Amplitude aufweist, wobei die Einschnittwände in einem dem Einschnittgrund benachbarten Endabschnitt, welcher eine geringe radiale Erstreckung aufweist, ausschließlich unstrukturiert ausgeführt sind.

Ein Fahrzeugluftreifen der eingangs genannten Art ist beispielsweise aus der EP-A-1 782 970 bekannt. Der Fahrzeugluftreifen weist Profilelemente mit in Draufsicht wellenförmigen Einschnitten auf. In radialer Richtung bestehen diese Einschnitte aus zwei Abschnitten, einem der Laufstreifenperipherie benachbarten schmalen Abschnitt konstanter Breite und einem breiten Abschnitt im Bereich des Einschnittgrundes. Aus der WO-A-2007/101794 ist ein Fahrzeugluftreifen mit Einschnitten bekannt, welche im radial inneren Bereich Einschnittwände aufweisen, die eine dreidimensionale Struktur besitzen, sodass sich die Einschnittwände aneinander verhaken können, um ihre Relativbewegung zu vermeiden. Aus der WO-A-99/48707 ist ein Fahrzeugluftreifen bekannt, dessen Laufstreifen mit Profilelementen mit Einschnitten versehen ist, welche ebenfalls dreidimensional strukturiert sind, wobei die Einschnittwände eine Anzahl von Vertiefungen bzw. Erhebungen aufweisen.

Ein Fahrzeugluftreifen mit einem weiteren Laufstreifen ist beispielsweise aus der EP-B-0 125 437 bekannt. Die Profilblöcke sind mit gewellten oder im Zickzack verlaufenden Einschnitten versehen, deren Wellenlänge und Amplitude klein sind im Vergleich zu den Abmessungen der Profilblöcke. Die Einschnitte weisen an ihrem Grund kleinere Amplituden auf als an der Laufstreifenoberfläche, wobei die Amplituden am Grund der Einschnitte bis zu Null verringert sind. Die Einschnitte können ferner derart ausgeführt sein, dass, ausgehend von der Peripherie des Laufstreifens, die Amplitude bis in eine gewisse Tiefe konstant ist, und dann bis zur maximalen Tiefe der Einschnitte abnimmt. Derart ausgeführte Einschnitte weisen eine geringere Rissanfälligkeit am Einschnittgrund auf als Einschnitte, die über ihre gesamte radiale Erstreckung mit einer gleichbleibenden Zickzack- oder Wellenform versehen sind.

Der Erfindung liegt die Aufgabe zu Grunde, Einschnitte in Laufstreifen von Reifen zu verbessern, insbesondere die Rissanfälligkeit am Einschnittgrund von Einschnitten in Laufstreifen von Nutzfahrzeugreifen deutlich zu reduzieren.

Gelöst wird die gestellte Aufgabe erfindungsgemäß dadurch, dass sich zwischen dem unstrukturierten Endabschnitt und dem Abschnitt mit der Wellen- oder Zickzackform ein Übergangsabschnitt befindet, dessen radiale Erstreckung bis zu 40% der maximalen Einschnitttiefe beträgt und über dessen radiale Erstreckung in Richtung Endabschnitt die Amplitude der Wellen- oder Zickzackform kontinuierlich geringer wird, und wobei der Einschnitt im Abschnitt mit der Wellen- oder Zickzackform, im Übergangsabschnitt und im Endabschnitt gleich breit ist.

Bei der Erfindung sind daher die Einschnitte im Laufstreifen derart gestaltet, dass sie im Bereich oder in Bereichen mit maximaler Tiefe über eine gewisse radiale Erstreckung unstrukturiert sind. Dadurch wird das betreffende Profilelement im Laufstreifen stabilisiert, so dass das Entstehen von Rissen am Einschnittgrund wirkungsvoll verhindert wird. Zwischen dem unstrukturierten Endabschnitt und dem dreidimensional strukturierten Abschnitt ist ein Übergangsabschnitt ausgebildet. In diesen Übergangsabschnitten wird die dreidimensionale Struktur bis zum Endabschnitt zum Verschwinden gebracht, ohne abrupte und gegebenenfalls Einrisse verursachende Veränderungen in der Struktur des Einschnittes zu schaffen.

Für eine gute Stabilisierung des mit erfindungsgemäßen Einschnitten versehenen Profilelementes ist es von Vorteil, wenn der Endabschnitt über eine radiale Erstreckung von 10% bis 30% der maximalen Einschnitttiefe verläuft.

Gemäß einer bevorzugten Ausführungsform der Erfindung verlaufen die unstrukturierten Endabschnitte in Draufsicht geradlinig und sind daher durch ebene Einschnittwandabschnitte begrenzt.

Die dreidimensional strukturierten Einschnittabschnitte können bis zur Laufstreifenperipherie reichen und daher über einen Großteil der Erstreckung des Einschnittes derart ausgeführt sein, dass sie in erwünschter Weise die Quer- und Längssteifigkeit des Profilelementes sowie die Griffeigenschaften möglichst optimal beeinflussen.

Bei erfindungsgemäß ausgeführten Einschnitten kann der radial äußerste Abschnitt an der Laufstreifenperipherie breiter ausgeführt sein als die sonstigen Abschnitte des Einschnittes. Insbesondere kann der derart gebildete breiteste Abschnitt eine Breite aufweisen, die bis zum Fünffachen der sonstigen Breite des Einschnittes beträgt. Durch diese Maßnahmen lässt sich die Stabilität der Profilelemente nahe der Laufstreifeperipherie beeinflussen.

Weitere Merkmale, Vorteile und Einzelheiten der Erfindung werden anhand der Zeichnung, die mehrere Ausführungsbeispiele darstellt, näher beschrieben.
Fig. 1 zeigt eine Schrägansicht eines Profilelementes eines Laufstreifenprofils eines Fahrzeugluftreifens mit einer Ausführungsvariante der Erfindung,
Fig. 2 eine Vorderansicht auf ein Lamellenblech zur Herstellung von in Fig. 1 gezeigten Einschnitten,
Fig. 3 eine Frontansicht des Lamellenbleches aus Fig. 2,
Fig. 4 eine Ansicht eines Lamellenbleches zur Herstellung einer weiteren Ausführungsvariante eines Einschnittes in einem Profilelement eines Laufstreifens und
Fig. 5 eine Frontansicht des Lamellenbleches aus Fig. 4.

Die Erfindung befasst sich mit einer besonderen Ausführung von Einschnitten in Profilelementen von Laufstreifen in Fahrzeugluftreifen, insbesondere für Nutzfahrzeuge. Die Erfindung ist jedoch nicht auf Nutzfahrzeugreifen eingeschränkt, sondern auch bei Reifen für PKW oder andere Fahrzeuge einsetzbar.

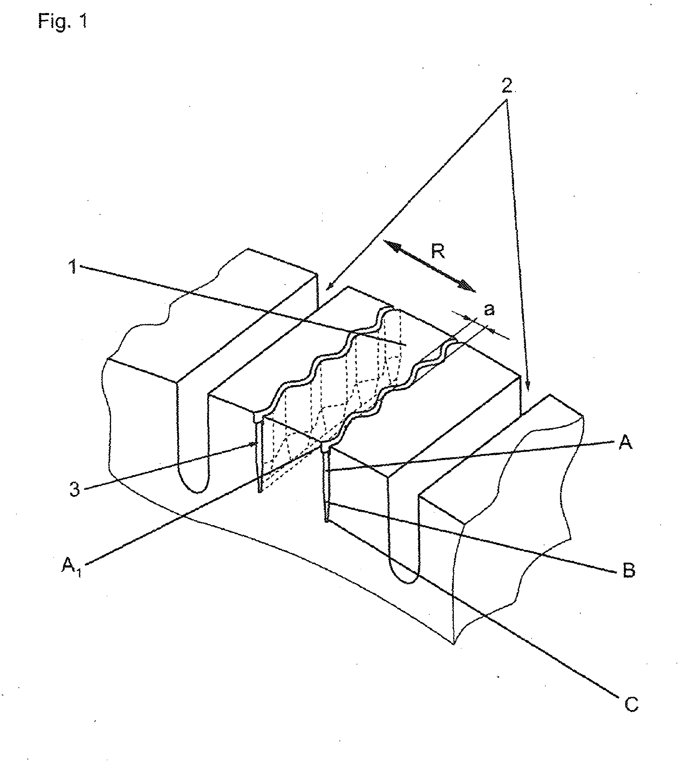

Fig. 1 zeigt beispielhaft ein Profilelement für einen Laufstreifen in der Form eines Profilblockes 1, welcher in Umfangsrichtung, die durch den Doppelpfeil R angedeutet ist, von Quernuten 2 begrenzt ist. Solche Profilblöcke bilden in Umfangsrichtung umlaufende Reihen, die von weiteren Profilblockreihen oder Profilrippen üblicherweise durch Umfangsnuten getrennt sind. Der in Fig. 1 gezeigte Profilblock 1 weist zwei im Wesentlichen in Laufstreifenquerrichtung verlaufende Einschnitte 3 auf, die den Profilblock 1 komplett durchqueren. Die beiden übereinstimmend ausgeführten Einschnitte 3 weisen in Draufsicht eine Wellenform auf, deren Amplitude a, je nach Einsatz des Einschnittes 3, zwischen 1,0 mm und 25 mm betragen kann. In Laufstreifen von Nutzfahrzeugreifen wird die Amplitude a in der Größenordnung von 7 mm bis 10 mm gewählt. Die die Einschnitte 3 begrenzenden Einschnittwände 3a sind bei der dargestellten Ausführungsvariante ebenfalls übereinstimmend ausgeführt.

Jeder Einschnitt 3 weist einen von der Laufstreifenperipherie in radialer Richtung verlaufenden Abschnitt A auf, welcher bis auf eine Tiefe von 80% der Profiltiefe PT reicht, die je nach Reifentyp zwischen 8 mm und 30 mm beträgt. Der Abschnitt A ist mit einem radial äußersten Teilabschnitt A₁ versehen, der bis zum Fünffachen breiter ist als die sonstige Breite des Einschnittes 3, welche zwischen 0,3 mm und 1 mm beträgt. Innerhalb des gesamten Abschnittes A bleiben die Wellenform bzw. die Geometrie des Einschnittes 3 bzw. der Einschnittwände 3a gleich. Der Abschnitt A₁ reicht in radialer Richtung bis auf eine Tiefe von maximal 35% der Profiltiefe PT. An den Abschnitt A schließt in radialer Richtung ein Übergangsabschnitt B an, der derart gestaltet ist, dass die Amplitude a der Wellenform in radialer Richtung kontinuierlich geringer wird und am radial inneren Ende des Abschnittes B keine Wellenform mehr gegeben ist. Der Übergangsabschnitt B reicht auf eine Tiefe von bis zu 90% der Profiltiefe PT. An den Abschnitt B schließt als letzter Abschnitt im Inneren des Profilblockes 1 ein Endabschnitt C an, in welchem die Einschnittwände 3a nicht strukturiert sind und insbesondere in Draufsicht geradlinig verlaufen. Bevorzugt wird der Endabschnitt C derart ausgeführt, dass er über 10 % bis 30 % der radialen Erstreckung des Einschnittes 3 verläuft. Der Übergangsabschnitt B und der Abschnitt A werden bezüglich ihrer radialen Erstreckung entsprechend angepasst, wobei die radiale Erstreckung des Übergangsabschnittes B vorzugsweise bis zu 40 % der Einschnitttiefe PT beträgt.

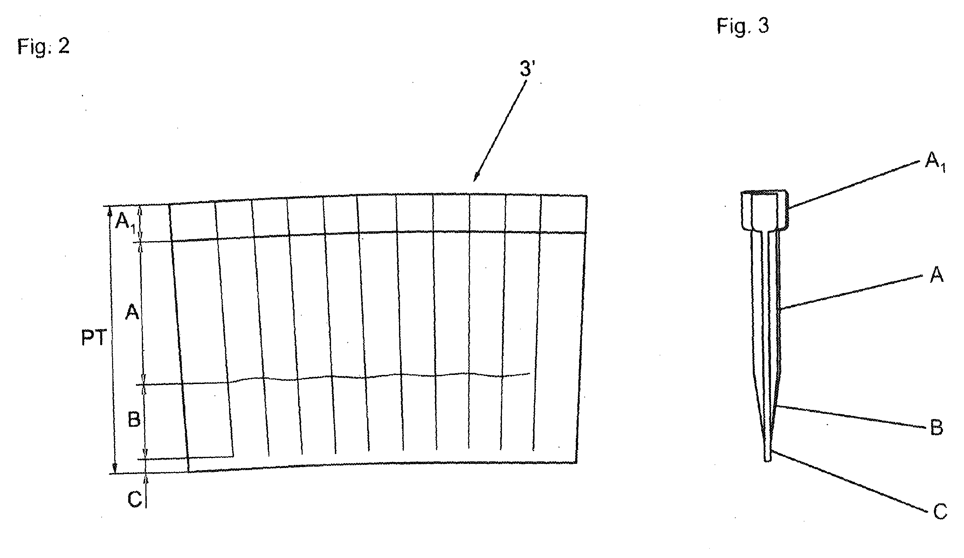

Fig. 2 und Fig. 3 zeigen Ansichten eines Lamellenbleches 3', welches zur Herstellung von Einschnitten 3 gemäß Fig. 1 geeignet ist. Das Lamellenblech 3' wird auf nicht gezeigte und bekannte Weise in einer Reifenvulkanisationsform verankert, wobei der zur Verankerung vorgesehene Teil, welcher an den Abschnitt A anschließt, nicht dargestellt ist. Das Lamellenblech 3' weist in radialer Richtung drei über seine Quererstreckung jeweils konstant breite Abschnitte A', B' und C', entsprechend den Abschnitten A, B , C des Einschnittes 3, auf. Erkennbar sind ferner ein Abschnitt A₁', welcher dem Abschnitt A₁ im Einschnitt 3 entspricht, sowie die Wellenform mit der Amplitude a. Die Dimension PT' entspricht der Einschnitttiefe PT im fertigen Reifen.

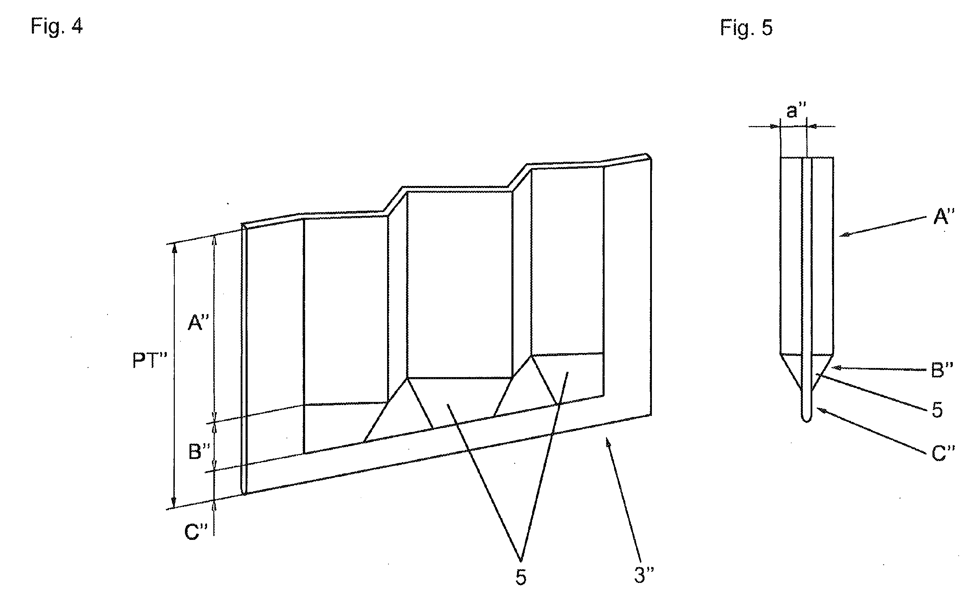

Fig. 4 und Fig. 5 zeigen ein Lamellenblech 3", welches eine Variante des in Fig. 2 und Fig. 3 gezeigten Lamellenbleches 3' ist. Das Lamellenblech 3" weist ebenso wie das Lamellenblech 3' drei Abschnitte A", B" und C" auf, wobei der Abschnitt A" im Wesentlichen zickzack-förmig geformt ist. Das Lamellenblech 3" besteht komplett aus einem Blech konstanter Stärke, welche zwischen 0,3 mm und 1 mm gewählt wird. Die Amplitude a" der Zickzack-Form des Lamellenbleches 3" kann analog zur ersten Ausführungsform zwischen 1 mm und 25 mm betragen. Der Abschnitt A" verläuft über einen Großteil der radialen Erstreckung des Lamellenbleches 3" und insbesondere bis zu 80 % der radialen Abmessung PT" des Lamellenbleches 3". An den Abschnitt A" schließt der Übergangsbereich B" an, an welchen der Endabschnitt C" anschließt, welcher unstrukturiert ist und einen gerade verlaufenden Streifen bildet. Die radiale Erstreckung des Endabschnittes C" beträgt analog zur ersten Ausführungsvariante zwischen 10% und 30% der Erstreckung PT". Im Übergangsabschnitt B" erfolgt über trapez- und dreieckförmige Übergangsflächen 5 ein Übergang vom Abschnitt A" zum Endabschnitt C". Ein derartiges Lamellenblech 3" erzeugt in einem Profilelement eines Laufstreifens eines Fahrzeugluftreifens einen Einschnitt, welcher von der Laufstreifenperipherie bis in eine Tiefe, die der radialen Erstreckung des Abschnittes A" entspricht, eine konstante Zickzack-Form aufweist, am Einschnittgrund verläuft ein unstrukturierter Einschnittabschnitt durchgehend in gerader Form.

Erfindungsgemäß ausgeführte Einschnitte können abschnittsweise eine verringerte Tiefe aufweisen. In solchen Bereichen kann über die gesamte radiale Erstreckung des Einschnittes eine dreidimensionale Struktur gegeben sein.

Die Erfindung ist auf die dargestellten Ausführungsbeispiele nicht eingeschränkt. Es gibt eine Vielzahl von weiteren Varianten von Einschnitten bzw. den diese bildenden Lamellenblechen, die gemäß der Erfindung ausführbar sind. Solche Varianten können beispielsweise Kombinationen oder Vervielfältigungen der dargestellten und beschriebenen Ausführungsformen sein.

### Bezugszeichenliste

- 1: Profilblock
- 2: Quernuten
- 3: Einschnitte
- a: Amplitude
- A: erster Abschnitt
- A₁: radial äußerster Abschnitt
- B: Übergangsabschnitt
- C: Endabschnitt
- 3': Lamellenblech
- A': Abschnitt
- B': Abschnitt
- C': Abschnitt
- a': Amplitude
- 3": Lamellenblech
- A": Abschnitt
- B": Abschnitt
- C": Abschnitt
- a": Amplitude
- 5: Übergangsflächen
- A"': Abschnitt
- A₁"': Abschnitt
- 6: Abschnittteile
- C"': Abschnitt

## Patentansprüche

1. Fahrzeugluftreifen mit einem Laufstreifen, welcher sich aus Profilelementen, wie Profilblöcken (1) oder Profilrippen, zusammensetzt, welche mit Einschnitten (3) versehen sind, die sich in radialer Richtung erstrecken und deren Einschnittwände (3a) Abschnitte (A, A") mit einer, in Draufsicht betrachtet, Wellen- oder Zickzackform aufweisen, die über die radiale Erstreckung des Abschnittes (A, A") eine gleich bleibende Amplitude (a, a") aufweist, wobei die Einschnittwände (3a) in einem dem Einschnittgrund benachbarten Endabschnitt (C, C"), welche eine geringe radiale Erstreckung aufweist, ausschließlich unstrukturiert ausgeführt sind,
**dadurch gekennzeichnet,**
**dass** sich zwischen dem unstrukturierten Endabschnitt (C, C") und dem Abschnitt (A, A") mit der Wellen- oder Zickzackform ein Übergangsabschnitt (B, B") befindet, dessen radiale Erstreckung bis zu 40% der maximalen Einschnitttiefe (PT) beträgt und über dessen radiale Erstreckung in Richtung Endabschnitt (C, C") die Amplitude (a, a") der Wellen- oder Zickzackform kontinuierlich geringer wird, und wobei der Einschnitt (3) im Abschnitt (A, A") mit der Wellen- oder Zickzackform, im Übergangsabschnitt (B, B") und im Endabschnitt (C, C") gleich breit ist.

2. Fahrzeugluftreifen nach Anspruch1, **dadurch gekennzeichnet, dass** der Endabschnitt (C, C") über eine radiale Erstreckung von 10% bis 30% der maximalen Einschnitttiefe (PT) verläuft.

3. Fahrzeugluftreifen nach Anspruch1 oder 2, **dadurch gekennzeichnet, dass** der Endabschnitt (C, C") in Draufsicht geradlinig verläuft.

4. Fahrzeugluftreifen nach einem der Ansprüche 1 bis 3, **dadurch gekennzeichnet, dass** der Abschnitt (A, A") mit der Wellen- oder Zickzackform bis zur Laufstreifenperipherie reicht.

5. Fahrzeugluftreifen nach einem der Ansprüche 1 bis 4, **dadurch gekennzeichnet, dass** der Einschnitt (3) an der Laufstreifenperipherie mit einem radial äußersten Abschnitt (A1) versehen ist, welcher breiter ausgeführt ist als die anderen Einschnittabschnitte.

6. Fahrzeugluftreifen nach Anspruch 5, **dadurch gekennzeichnet, dass** der breitere Abschnitt (A₁) eine Breite aufweist, die bis zum Fünffachen der sonstigen Breite des Einschnittes (3) beträgt.

## Claims

1. Pneumatic vehicle tyre with a tread rubber, which is made up of profile elements, such as profile blocks (1) or profile ribs, which are provided with sipes (3), which extend in the radial direction and the sipe walls (3a) of which have portions (A, A") with a form that is wavy or zigzagging in plan view and has a constant amplitude (a, a") over the radial extent of the portion (A, A"), the sipe walls (3a) being of an exclusively unstructured configuration in an end portion (C, C") of a small radial extent adjacent to the base of the sipe, **characterized in that** between the unstructured end portion (C, C") and the portion (A, A") with the wavy or zigzagging form there is a transitional portion (B, B"), the radial extent of which is up to 40% of the maximum sipe depth (PT) and over the radial extent of which in the direction of the end portion (C, C") the amplitude (a, a") of the wavy or zigzagging form becomes continuously smaller, and the sipe (3) is of the same width in the portion (A, A") with the wavy or zigzagging form, in the transitional portion (B, B") and in the end portion (C, C").

2. Pneumatic vehicle tyre according to Claim 1, **characterized in that** the end portion (C, C") runs over a radial extent of 10% to 30% of the maximum sipe depth (PT).

3. Pneumatic vehicle tyre according to Claim 1 or 2, **characterized in that** the end portion (C, C") runs in a straight line in plan view.

4. Pneumatic vehicle tyre according to one of Claims 1 to 3, **characterized in that** the portion (A, A") with the wavy or zigzagging form reaches up to the periphery of the tread rubber.

5. Pneumatic vehicle tyre according to one of Claims 1 to 4, **characterized in that** the sipe (3) is provided at the periphery of the tread rubber with a radially outermost portion (A₁), which is of a wider configuration than the other portions of the sipe.

6. Pneumatic vehicle tyre according to Claim 5, **characterized in that** the wider portion (A₁) has a width which is up to five times the width otherwise of the sipe (3).

## Revendications

1. Bandage pneumatique pour roue de véhicule, qui présente
une bande de roulement constituée de l'assemblage d'éléments profilés, par exemple des blocs profilés (1) ou des nervures profilées, dotés d'entailles (3) qui s'étendent dans la direction radiale et dont les parois (3a) présentent des parties (A, A") dont la forme vue en plan est ondulée ou en zigzag d'amplitude constante (a, a") sur l'extension radiale de la partie (A, A"),
les parois (3a) des entailles étant entièrement non structurées dans une partie d'extrémité (C, C") voisine du fond de l'entaille et d'extension radiale réduite,
**caractérisé en ce**
entre la partie d'extrémité (C, C") non structurée et la partie (A, A") avec la forme ondulée ou en zigzag il se trouve une partie de transition (B, B") dont l'extension radiale représente jusqu' à 40 % de la profondeur maximale (PT) de l'entaille et dans laquelle l'amplitude (a, a") de la forme ondulée ou en zigzag diminue progressivement sur son extension radiale en direction de la partie d'extrémité (C, C") et
que l'entaille (3) présente une largeur identique dans la partie (A, A") qui présente la forme ondulée ou en zigzag, dans la partie de transition (B, B") et dans la partie d'extrémité (C, C").

2. Bandage pneumatique pour roue de véhicule selon la revendication 1, **caractérisé en ce que** l'extension radiale de la partie d'extrémité (C, C") représente entre 10 % et 30 % de la profondeur maximale (PT) de l'entaille.

3. Bandage pneumatique pour roue de véhicule selon la revendication 1 ou 2, **caractérisé en ce que** vue en plan, la partie d'extrémité (C, C") s'étend en ligne droite.

4. Bandage pneumatique pour roue de véhicule selon l'une des revendications 1 à 3, **caractérisé en ce que** la partie (A, A") qui présente la forme ondulée ou en zigzag s'étend jusqu'à la périphérie de la bande de roulement.

5. Bandage pneumatique pour roue de véhicule selon l'une des revendications 1 à 4, **caractérisé en ce qu'**à la périphérie de la bande de roulement, l'entaille (3) est dotée d'une partie radialement extérieure (A1) plus large que les autres parties de l'entaille.

6. Bandage pneumatique pour roue de véhicule selon la revendication 5, **caractérisé en ce que** la largeur de la partie (A1) plus large représente jusqu'à cinq fois la largeur du reste de l'entaille (3).
